# EUROPEAN PATENT SPECIFICATION

(11) **EP 4 551 314 B1**
(45) Date of publication and mention of the grant of the patent: **20.05.2026**
(21) Application number: 23742155.7
(22) Date of filing: 04.07.2023
(51) Int. Cl.: B01D 53/58, A01K 1/00, B01D 53/78, B01D 39/08, B01D 46/12, B01D 46/62

(54) **PROCESS FOR WASHING TREATMENT FOR PURIFYING AMMONIA-CONTAINING AIR**
VERFAHREN ZUR WÄSCHEBEHANDLUNG ZUR REINIGUNG VON AMMONIAK-HALTIGER LUFT
PROCÉDÉ DE TRAITEMENT DE LAVAGE POUR PURIFIER DE L'AIR CONTENANT DE L'AMMONIAC

(30) Priority: 04.07.2022 NL 2032357
(43) Date of publication of application: 14.05.2025
(73) Proprietor: Klaas de Boer Beheer B.V., 1674 PM Opperdoes (NL)
(72) Inventor: DE BOER, Nicolaas Cornelis, 1674 PM Opperdoes (NL)
(74) Representative: Dogio Patents B.V.
(86) International application number: PCT/NL2023/050361
(87) International publication number: WO 2024/010447

(56) References cited:
- EP-A1- 2 308 583
- EP-A1- 2 628 388
- EP-A1- 3 984 622
- WO-A1-2022/002776
- CN-U- 207 102 306

## Description

The present invention concerns a method for subjecting ammonia-containing air to be cleaned from a space to a washing treatment, using a filter unit comprising a filter matrix which is capable of being run through by liquid in a first direction and permeable to gas in a second direction transversely to the first direction; wherein
- an aqueous liquid is introduced at a relatively high point on the filter matrix of the filter unit,
- the ammonia-containing air to be cleaned is passed through the filter matrix (225) in the second direction, and
- the aqueous liquid enriched with ammonia is collected at a relatively low point.

Such a method is well known in the profession, for example from the American patent publication US2006/0118058. A similar method is known from WO 2022/002776 A1, EP 2 308 583 A1, EP 3 984 622 A1 and EP 2 628 388 A1.

One problem is that the air needs to be extensively purified in order to limit damage to the environment.

The purpose of the present application is to provide a method of the kind referred to in the preamble which makes it possible to effectively remove ammonia from the air of a space.

To this end, a method according to the preamble is characterized by the fact that the filter unit comprises at least one cloth and the ammonia-containing air to be cleaned is passed downstream of the filter matrix through at least one cloth, with at least one cloth in liquid-exchanging contact with the filter matrix.

It has been found that with the humidified cloths the concentration of ammonia can be efficiently reduced with a relatively low flow resistance (and associated a relatively low energy consumption). In this way, ammonia can be removed from the air of spaces such as livestock houses, manure digesters and water treatment plants where ammonia is emitted into the air of the space and accumulates.

The aqueous liquid is usually an acidic liquid with a pH<6.

The cloths are common woven cloths.

The number of canvases is preferably a maximum of 8, and is preferably 2.

It is preferable that the filter unit comprises at least two cloths and that the ammonia-containing air to be cleaned is passed downstream of the filter matrix through the at least two cloths, the cloths being in liquid-exchanging contact with the filter matrix.

Without being tied to any theory, it is thought that the absorption of ammonia is promoted by the transition from one cloth to the cloth downstream (swirl), and that this is more beneficial than shortening the diffusion distance by choosing a small mesh size for a single cloth, which would lead to a relatively larger pressure drop, wherein the pressure drop is preferably between 0.5 and 1000 Pascal for better performance, and even more preferably between 0.5 and 300 Pascals.

A favourable embodiment has the special feature that at least one cloth is provided with an average mesh size of less than 4 square mm, preferably less than 2 square mm and even more preferably between 0.5 and 1.5 square mm.

In this manner, the stream with contaminated air is cleaned of ammonia even more efficiently. Better quality cloths with regular mesh size relatively close to the average mesh size of around 1 square millimeter have an advantageous effect because the mesh size is such that the air flow can pass well but also so large that if cloth fibers of which the cloth is made by absorbing the aqueous liquid swell, the mesh size does not become so small that it too much impedes the flow of ammonia-containing air to be cleaned. A favorable embodiment has the particularity that at least one of the cloths includes natural vegetable fibers, preferably includes jute.

Thus, energy consumption remains relatively stable regardless of humidity or temperature. Linen and cotton provide better results than sheep wool, jute provides the best results. Preferably, all cloths are therefore composed of a material that includes at least 8% lignin and optionally at least 10%, preferably at least 20% hemicellulose and/or pectin with respect to the weight of the fiber.

A favorable embodiment has the particularity that the ammonia-containing air to be cleaned is passed through the filter matrix made of coconut fiber.

Thus, a better humidification of the cloths with aqueous liquid is achieved, which improves the absorption of ammonia.

A favorable embodiment has the particularity that upstream of the filter matrix the ammonia-containing air to be cleaned from the space is passed through a dust filter. Thus, the increase in flow resistance over time is inhibited.

A favorable embodiment has the particularity that the aqueous liquid includes an acid and has a pH between 1.0 and 6.0, preferably, at least initially, between 1.0 and 3.0, more preferably, at least initially, between 1.0 and 2.0.

The acid is preferably a weak acid with a pKa of >1, for example citric acid. Preferably, the concentration of citric acid, with respect to the weight of the aqueous liquid, is 10% or higher, preferably higher than 25%, preferably around 50%.

A favorable embodiment has the particularity that the acid in the aqueous liquid is an acid whose ammonium salt in the aqueous liquid has a worse solubility than the acid, and the concentration of the acid is chosen in such a way that, in the absence of ammonia, the concentration is at least 50% higher than the concentration of the maximum solubility of the ammonium salt of the acid, preferably at least 100% higher and more preferably at least 150% higher.

Thus, the capacity to absorb ammonia from the ammonia-containing air to be cleaned is improved. For example, an appropriate concentration of citric acid is at least 40%.

A favourable embodiment has the particularity that the concentration of water vapour in the ammonia-containing air to be cleaned is increased.

Thus, evaporation of the water in the filter is reduced and the risk of its dehydration is reduced. Advantageously, the air downstream of the dust filter is humidified. In addition or instead, the air is preferably humidified with water obtained by condensation. This does not contain salts. This water can be obtained with advantage by dehumidifying the air in the space with a dehumidifier.

A favorable embodiment has the particularity that for the purpose of cleaning the air, the ammonia-containing air to be cleaned is passed through the filter unit at a first flow rate and the aqueous liquid is periodically introduced to the filter unit at a second air flow rate lower than the first air flow rate.

Thus, foaming downstream of the filter matrix is reduced. The second air flow rate is advantageously zero. After passing ammonia-containing air with the first flow rate for a certain period of time, the aqueous liquid in the filter unit is changed again. Advantageously, between these two steps, crystallized ammonium salt is washed away with washing liquid, such as water, preferably water obtained by condensation.

A favourable embodiment has the particularity that the ammonia-containing air to be cleaned is passed through at least one further filter unit upstream of the filter matrix and, if applicable, downstream of a dust filter and/or a fan, wherein the at least one further filter unit comprises a further plurality of cloths and a further filter matrix.

Thus, by using several filter units, each filter unit with a stack of cloths and a layer of filter matrix, the concentration of ammonia in the ammonia-containing air to be cleaned can be reduced more efficiently compared to a purification device with only one filter unit comprising one stack of cloths and an equal amount of filter matrix.

A favorable embodiment has the particularity that relatively clean aqueous liquid is applied to the filter unit and relatively ammonia-contaminated aqueous liquid is applied to at least one further filter unit.

Thus, a higher efficiency of absorption of ammonia from the ammonia-containing air to be cleaned is obtained with the same amount of aqueous liquid.

A favourable embodiment has the particularity that air depleted by ammonia is passed downstream of the filter unit through a grid with at least one slat, wherein the at least one slat consists of a plane with a downstream edge and has an upstream edge whose upstream edge is positioned lower than the downstream edge.

In this way, any foaming downstream of the cloths and the filter matrix on slats is collected and aqueous liquid enriched with ammonia is returned to the cloths in order to flow towards the relatively low point to be collected there.

A favorable embodiment has the particularity that wherein air depleted by ammonia downstream of the filter matrix and the cloths, and optionally upstream the grid with slats, flows through a layer of coarse-meshed material.

Thus, any foaming downstream of the cloths and the filter matrix is reduced by means of the layer of foam-degrading material and the liquid enriched with ammonia is guided through the layer of foam-degrading material to the relatively low-lying point to be collected there. Preferably, the material is hydrophobic or has a rough surface for a stronger foam-breaking effect. The material is relatively coarse-meshed compared to an upstream plastic layer, the filter matrix and/or the cloths.

A favorable embodiment has the particularity that the ammonia-containing air to be cleaned is fed through the cloths by means of a fan placed upstream of at least one of the filter matrix and the dust filter, preferably the fan is adjustable.

Thus, an overpressure in the internal space of between 0.5 and 300 Pascals in relation to the environment of the device can be achieved.

The present invention will now be explained on the basis of the drawing, wherein
Fig. 1 shows an isometrically openwork view of a device for washing treatment of ammonia-containing air to be cleaned;
Fig. 2 shows a schematic cross-section of a device for carrying out cross-stream washing treatment of ammonia-containing air to be cleaned; and
Fig. 3 shows a different, more extensive embodiment of the purification device according to Fig. 1.

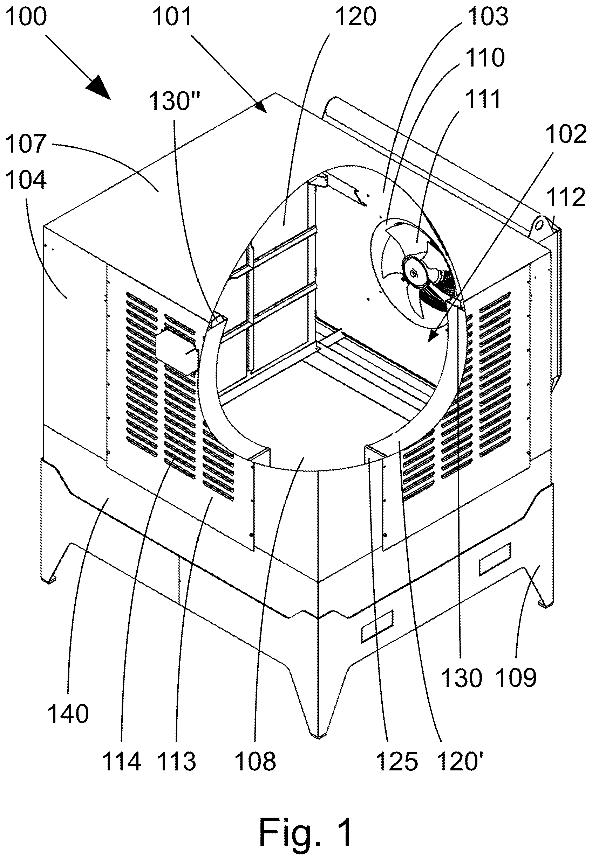

Fig. 1 shows an isometrically cut-away view of a purification device for carrying out cross-stream washing treatment of ammonia-containing air. The purification device 100 consisting of a housing 101 enclosing an internal space 102 by 6 walls, a side wall 103 with an opening 110, 3 side walls 104, an upper wall 107 and a lower wall 108. The housing 101 rests on a chassis 109. The side wall 103 includes an opening 110 that serves as an air inlet for the ammonia-containing air to be cleaned to internal space 102. Fan 111 is installed in opening 110 to allow ammonia-containing air to be cleaned to enter. For fan 111, a dust filter 112 has also been disposed to clean ammonia-containing air of dust particles. The three side walls 104, of which two side walls 104 are adjacent to sidewall 103 with opening 110 and one side wall 104 is opposite side wall 103, include openings that serve as air outlets. The openings are covered with grids 113. The grids 113 include slats 114. The slats 114 have a guiding slat surface 115, a proximal edge 116 attached to a wall and a distal edge 117, where the slat is inclined so that the distal edge 117 is positioned at a relatively high position relative to the proximal edge 116 and guiding slat surfaces 115 of slats 114 are facing the opening.

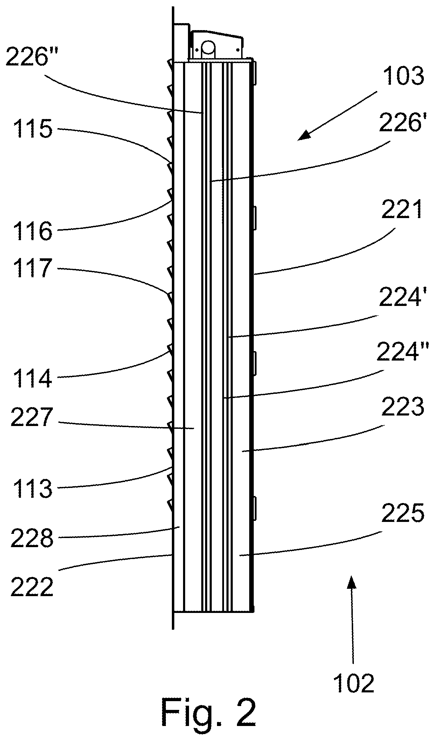

In the openings of side walls 104, 3D matrices 120 are included in frames 125, which frames are disposed in a sealing manner on the outer walls 104. The connection of the frames to the side walls 104 is such that during operation the ammonia-containing air to be cleaned in the internal space 102 can only flow in via the 3D matrix surfaces of the 3D matrices 120 facing the internal space 102 and then leave the internal space 102 via the 3D matrices 120. The composition of the 3D matrices 120 is shown in Fig. 2.

The 3D matrices 120 include a filter unit that each comprises a filter matrix sandwiched between 2 stacks of 2 layers of jute cloth each (not shown, see Fig. 2). Above all 3D matrices 120, irrigation devices 130 are disposed which can apply aqueous liquid to the filter matrices and jute cloths via liquid outlets in irrigation devices 130. Irrigation device 130' and irrigation device 130" are arranged on the top of the 3D matrices 120' and 120", respectively. The irrigation devices 130' are connected to a supply pipe for the supply of aqueous liquid, the irrigation devices 130" and 130" (not visible) are connected in series with intermediate connecting pipes to the 130' irrigation device so that these irrigation devices can also be supplied with aqueous liquid. Irrigation device 130‴ also includes an overflow so that the pressure of aqueous fluid in the irrigation devices, which are communicatively coupled, does not increase under pressure from the pump supplying aqueous liquid (not shown). In operation, aqueous liquid can flow downwards under the influence of gravity through the filter matrices included in the 3D matrices 120. Under the 3D matrices 120, a collection container 140 has been installed that can collect and collect aqueous liquid that has flowed through the 3D matrices 120. The collection container 140 is formed by a lower part of the side walls 103, 104 and the lower wall 108 of the housing 101.

In operation, the fan 111 draws ammonia-contaminated air from the vicinity of device 100. The air polluted with ammonia is first cleaned of dust particles by passing it through dust filter 112. The ammonia-contaminated air, which is cleared of dust particles through opening 110, then flows into the internal space 102 where an overpressure is established of around 0.75 Pa higher than the air pressure of the nearby area wherein the device 100 is located. The ammonia-contaminated air that has been cleared of dust particles flows out of the internal space 102 through the 3D matrices 120 due to the overpressure. At the same time, the irrigation devices 130 irrigate the 3D matrices 120 from above with an aqueous liquid containing a buffering agent. The fluid flow of the aqueous liquid can therefore receive ammonia from the cross-airflow of the ammonia-contaminated air flowing through the 3D matrices 120. The aqueous liquid flows from the lower side of the 3D matrices 120 at the lower wall 108 of the device 100 into the collection container 140 to be collected there. From the collection container, the aqueous liquid can be reused by irrigation devices 130 until the purification capacity falls below a desired threshold. The cross-airflow has the disadvantage that aqueous liquid in the form of droplets, aerosols or foam are carried along, the aqueous liquid in these forms can be captured by the guiding slat surfaces after which it flows back into the 3D matrices 120 under the influence of gravity. In this way, the outflowing air flow is partly cleaned of dust, ammonia and aqueous liquid that served for purification.

In an alternative cyclical method for this and other embodiments of the invention, fan 111 is turned off or put in a state of relatively low power during the application of aqueous liquid with the buffering agent by means of the irrigation devices 130 on the 3D matrices 120. Preferably, so much liquid is applied that the materials are saturated and excess aqueous liquid drains into the collection container 140. After cessation of the application of the ammonia-absorbing washing liquid, ammonia-contaminated air is extracted from the vicinity of device 100 and blown into the internal space 102 of the device 100 in order to establish an air flow of ammonia-contaminated air through the 3D matrices 120 at an overpressure of 0,75 Pa with respect to the vicinity of the device. The risk of foaming downstream of the filter matrix and the loss of water from the aqueous liquid is reduced with this manner of operation. With a hygrometer (not shown) the humidity can be determined and the duration between successive cycles can be determined according to the above cyclic method. In the meantime, if the capacity of the aqueous liquid to absorb ammonia from the ammonia-polluted air is still sufficient, additional water can be applied to the 3D matrices 130 in one or more washing steps to compensate for loss of water due to evaporation from the aqueous liquid, preferably the fan 111 is then switched off or running at relatively low power to prevent foaming. Washing steps reduce the use of aqueous liquid and its components, including the citric acid. The concentration of citric acid is 50% with respect to the weight of the aqueous liquid for application to the filter units. Depending on the temperature and humidity of the ammonia-contaminated air, the permissible loss of water from the aqueous solution and thus the duration of operation of fan 111 can be determined before dissolved citric acid and/or ammonia in the 3D matrices 120 crystallize or precipitate. Additionally or alternatively, the ammonia-containing air to be cleaned can be humidified so that fewer or no washing steps are required before changing the aqueous liquid.

Fig. 2 shows a schematic cross-section of a 3D matrix from the embodiment of Fig. 1. 3D matrix 120 is a multilayer assembly with a side 221 facing the internal space 102 and a side 222 facing a grid 113 with slats 114. An air flow flows from said side 221 to said side 222 through the 3D matrix. The 3D matrix 120 is constructed from side 221 towards side 222 from side 222 facing the internal space 102 as follows: a first plastic layer 223 through which air can flow, a first jute cloth stack 224 of with a first jute cloth 224' and a second jute cloth 224" with both a mesh size corresponding to a mesh surface transverse to the air flow of approximately 1 millimetre. The stacking of the first jute cloth 224' and the second jute cloth 224" is such that the meshes of the first jute cloth 224' in most cases do not completely coincide with the meshes of the second jute cloth 224". Next, a filter matrix 225 composed of a layer of coconut fibre follows, which is also flanked on the other side by a second stack of jute cloth, wherein the second stack of jute cloth 226' consists of a third jute cloth 226' and a fourth jute cloth 226" of which the properties of the third jute cloth 226' and the fourth jute cloth 226" are the same as those of the first jute cloth 224' and the second jute cloth 224" and the manner of stacking is the same as the stacking of the first jute cloth 224' and the second jute cloth 224" in the first stack 224. Together, the filter matrix and the cloths form a filter unit. The second stack of jute cloth 226 is then flanked by a second plastic layer 227 through which air can flow. On the side 222 facing grid 113 with slats 114, a foam breaking layer 228 of coarse plastic fibres has been applied.

The different layers of the 3D matrix are composed in such a way that a pressure difference of at least 0.75 Pa can be established by means of the fan. If the power of the ventilator allows, one or more additional stacks of at least two jute cloths can be installed upstream of the first plastic layer 223 and/or between the second plastic layer 227 and the foam breaking layer with which the capacity can be increased.

In operation, foaming in the 3D matrix on the side of grid 113 is reduced by passing the air flow that may contain foam through the foam breaking layer 228. If the air flow still includes foam after leaving the foam breaking layer 228, this foam will collect on the guiding slat surface 115 of slats 114, on which the foam can further break down and resulting aqueous liquid with any contaminants can flow back towards the proximal edge 116 of the slats 114 to flow through the foam breaking layer 228 towards the collection container, not shown, under the 3D matrix and collected in the collection container. In this way, the consumption of aqueous liquid to purify the air is reduced.

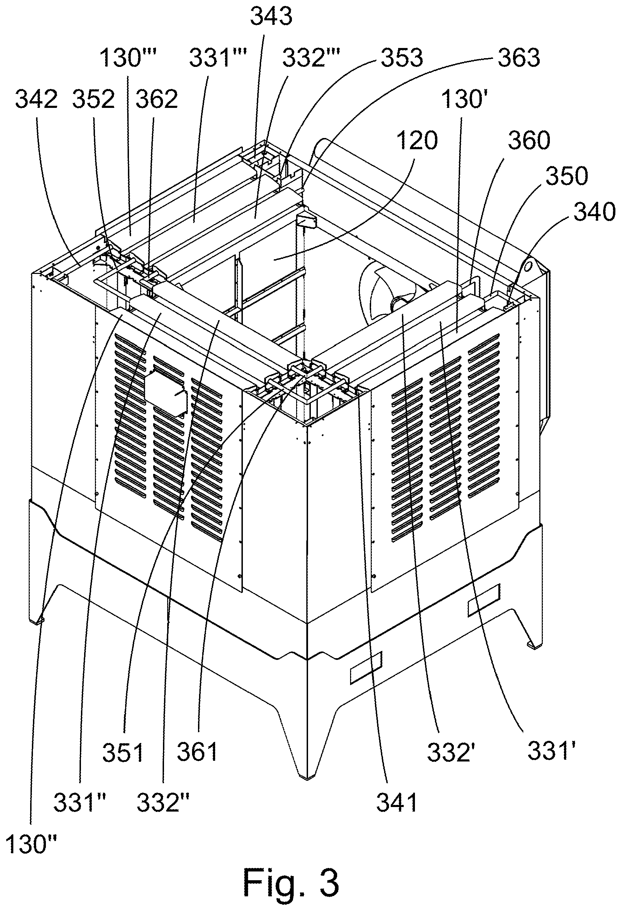

Fig. 3 shows a different, more extensive embodiment of the purification device according to Fig. 1. This embodiment is provided with all aspects of the purification device according to Fig. 1, but, in addition to the usual 3D matrices 120 that are arranged adjacent to grids 113, is provided with additional 3D matrices 321 and 3D matrices 322. 3D matrices 321 are adjacent to 3D matrices 320 on the sides of matrices 320 facing internal space 102. 3D matrices 322 are adjacent to 3D matrices 321 on the sides of matrices 321 facing internal space 102. Above each 3D matrix 120, 321, 322, an irrigation device 130, 331, 332 is disposed that can supply the filter layers and jute cloths with aqueous liquid.

Irrigation device 130', irrigation device 130", irrigation device 130‴, are disposed on top of each of 3D matrices 120. Irrigation device 130' is provided with a supply pipe 340 for the supply of aqueous liquid and connected in series to irrigation device 130" and irrigation device 130‴ by means of connecting pipe 341 and connecting pipe 342, respectively. Excess aqueous liquid can flow back through an overflow 343 into a first reservoir to which supply pipe 340 is connected for supply of aqueous liquid. Irrigation device 331', irrigation device 331", irrigation device 331‴, are disposed on top of each of 3D matrices 321. Irrigation device 331' is provided with a supply pipe 350 for the supply of aqueous liquid and connected in series to irrigation device 331" and irrigation device 331‴ by means of connecting pipe 351 and connecting pipe 352, respectively. Excess aqueous liquid can flow back through an overflow 353 into a second reservoir to which supply pipe 350 is connected for supply of aqueous liquid. Irrigation device 332', irrigation device 332", irrigation device 332‴, are disposed on top of each of 3D matrices 322. Irrigation device 332' is provided with a supply pipe 360 for the supply of aqueous liquid and connected in series to irrigation device 332" and irrigation device 332‴ by means of connecting pipe 361 and connecting pipe 362, respectively. Excess aqueous liquid can flow back through an overflow 363 into a third reservoir to which supply pipe 360 is connected for supply of aqueous liquid. Aqueous liquid flowing through 3D matrices 120 and containing absorbed ammonia can be collected in the second reservoir. Aqueous liquid flowing through 3D matrices 321 and containing more absorbed ammonia can be collected in the third reservoir. Aqueous liquid flowing through 3D matrices 322 and containing even more absorbed ammonia can also be collected in the third reservoir. For example, during operation, the first reservoir contains relatively pure aqueous liquid, the second reservoir contains relatively impure aqueous liquid, and the third reservoir contains the most impure aqueous liquid. This arrangement of matrices, irrigation devices and pipes in the treatment plant more efficiently extracts ammonia from the ammonia-containing air to be cleaned.

## Claims

1. Method for subjecting ammonia-containing air to be cleaned from a space to a washing treatment, using a filter unit comprising a filter matrix (225) which is capable of being run through by liquid in a first direction and permeable to gas in a second direction transversely to the first direction;
wherein
- an aqueous liquid is introduced at a relatively high point on the filter matrix (225) of the filter unit,
- the ammonia-containing air to be cleaned is passed through the filter matrix (225) in the second direction, and
- the aqueous liquid enriched with ammonia is collected at a relatively low point,
**characterized in that** the filter unit comprises at least one cloth (226', 226") and the ammonia-containing air to be cleaned downstream of the filter matrix (225) is passed through at least one cloth (226', 226"), wherein the at least one cloth (226', 226") is in liquid-exchanging contact with the filter matrix (225).

2. Method according to claim 1, wherein the filter unit comprises at least two cloths (226', 226") and the ammonia-containing air to be cleaned is passed downstream of the filter matrix (225) through the at least two cloths (226', 226"), the cloths (226', 226") being in liquid-exchanging contact with the filter matrix (225).

3. Method according to conclusion 1 or 2, wherein at least one cloth (226', 226") is provided with an average mesh size of less than 4 square mm, preferably less than 2 square mm and preferably between 0,5 and 1,5 square mm.

4. Method according to one of the preceding conclusions, wherein at least one of the cloths (226', 226") includes natural vegetable fibres, preferably includes jute.

5. Method according to one of the preceding conclusions, wherein the ammonia-containing air to be cleaned is passed through the filter matrix (225) made of coconut fibre.

6. Method according to one of the preceding conclusions, wherein upstream of the filter matrix (225) the ammonia-containing air to be cleaned from the space is passed through a dust filter (112).

7. Method according to one of the preceding conclusions, wherein the aqueous liquid contains an acid and has a pH between 1,0 and 6,0, preferably, at least initially, between 1,0 and 3,0, more preferably, at least initially, between 1,0 and 2,0.

8. Method according to one of the preceding conclusions, wherein the acid in the aqueous liquid is an acid whose ammonium salt in the aqueous liquid has a worse solubility than the acid, and the concentration of the acid is chosen in such a way that, in the absence of ammonia, the concentration is at least 50% higher than the concentration of the maximum solubility of the ammonium salt of the acid, preferably at least 100% higher and more preferably at least 150% higher.

9. Method according to one of the preceding conclusions, wherein the concentration of water vapour in the ammonia-containing air to be cleaned is increased.

10. Method according to one of the preceding conclusions, wherein, for the purpose of cleaning the air, the ammonia-containing air to be cleaned is passed through the filter unit at a first flow rate and the aqueous liquid is periodically introduced to the filter unit at a second air flow rate lower than the first air flow rate.

11. Method according to one of the preceding conclusions, wherein the ammonia-containing air to be cleaned is passed through at least one further filter unit upstream of the filter matrix (225) and, if applicable, downstream of a dust filter (112) and/or a fan (111), wherein the at least one further filter unit comprises a further plurality of cloths and a further filter matrix (225).

12. Method according to claim 11, wherein relatively clean aqueous liquid is applied to the filter unit and relatively ammonia-contaminated aqueous liquid is applied to at least one further filter unit.

13. Method according to one of the preceding conclusions, wherein air depleted in ammonia is passed downstream of the filter unit through a grid (113) with at least one slat, wherein the at least one slat (114) consists of a plane (115) with a downstream edge (117) and has an upstream edge (116) whose upstream edge (116) is positioned lower than the downstream edge (117).

14. Method according to one of the preceding conclusions, wherein air depleted of ammonia downstream of the filter matrix (225) and the cloths (226', 226"), and optionally upstream the grid (113) with slats (114), flows through a layer of coarse-meshed material (228).

15. Method according to one of the preceding conclusions, wherein the ammonia-containing air to be cleaned is fed through the cloths (226', 226") by means of a fan (111) placed upstream of at least one of the filter matrix (225) and the dust filter (112), preferably the fan (111) is adjustable.

## Patentansprüche

1. Verfahren zum Vornehmen einer Wäschebehandlung von zu reinigender ammoniakhaltiger Luft aus einem Raum unter Verwendung einer Filtereinheit, die eine Filtermatrix (225) umfasst, die in einer ersten Richtung von Flüssigkeit durchströmbar ist und in einer zweiten Richtung, die quer zu der ersten Richtung verläuft, gasdurchlässig ist;
wobei
- eine wässrige Flüssigkeit an einem relativ hohen Punkt an der Filtermatrix (225) der Filtereinheit eingeleitet wird,
- die zu reinigende ammoniakhaltige Luft in der zweiten Richtung durch die Filtermatrix (225) geleitet wird und
- die mit Ammoniak angereicherte wässrige Flüssigkeit an einem relativ niedrigen Punkt gesammelt wird, **dadurch gekennzeichnet, dass** die Filtereinheit wenigstens ein Tuch (226', 226") umfasst und die zu reinigende ammoniakhaltige Luft stromabwärts der Filtermatrix (225) durch wenigstens ein Tuch (226', 226") geleitet wird, wobei das wenigstens eine Tuch (226', 226") in Flüssigkeitsaustauschkontakt mit der Filtermatrix (225) steht.

2. Verfahren nach Anspruch 1, wobei die Filtereinheit wenigstens zwei Tücher (226', 226") umfasst und die zu reinigende ammoniakhaltige Luft stromabwärts der Filtermatrix (225) durch die wenigstens zwei Tücher (226', 226") geleitet wird, wobei die Tücher (226', 226") in Flüssigkeitsaustauschkontakt mit der Filtermatrix (225) stehen.

3. Verfahren nach Schlussfolgerung 1 oder 2, wobei wenigstens ein Tuch (226', 226") mit einer durchschnittlichen Maschenweite von weniger als 4 Quadrat-mm, vorzugsweise weniger als 2 Quadrat-mm und vorzugsweise zwischen 0,5 und 1,5-Quadrat-mm versehen ist.

4. Verfahren nach einer der vorangehenden Schlussfolgerungen, wobei wenigstens eines der Tücher (226', 226") natürliche pflanzliche Fasern umfasst, vorzugsweise Jute umfasst.

5. Verfahren nach einer der vorangehenden Schlussfolgerungen, wobei die zu reinigende ammoniakhaltige Luft durch die Filtermatrix (225), die aus Kokosfaser hergestellt ist, geleitet wird.

6. Verfahren nach einer der vorangehenden Schlussfolgerungen, wobei stromaufwärts der Filtermatrix (225) die zu reinigende ammoniakhaltige Luft aus dem Raum durch einen Staubfilter (112) geleitet wird.

7. Verfahren nach einer der vorangehenden Schlussfolgerungen, wobei die wässrige Flüssigkeit eine Säure enthält und einen pH-Wert zwischen 1,0 und 6,0, vorzugsweise - wenigstens anfänglich - zwischen 1,0 und 3,0, besonders bevorzugt - wenigstens anfänglich - zwischen 1,0 und 2,0, aufweist.

8. Verfahren nach einer der vorangehenden Schlussfolgerungen, wobei die Säure in der wässrigen Flüssigkeit eine Säure ist, deren Ammoniumsalz in der wässrigen Flüssigkeit eine schlechtere Löslichkeit als die Säure aufweist, und die Konzentration der Säure derart gewählt wird, dass - in Abwesenheit von Ammoniak - die Konzentration wenigstens 50 % höher als die Konzentration der maximalen Löslichkeit des Ammoniumsalzes der Säure ist, vorzugsweise wenigstens 100 % höher und besonders bevorzugt wenigstens 150 % höher.

9. Verfahren nach einer der vorangehenden Schlussfolgerungen, wobei die Konzentration von Wasserdampf in der zu reinigenden ammoniakhaltigen Luft erhöht wird.

10. Verfahren nach einer der vorangehenden Schlussfolgerungen, wobei - zum Zweck des Reinigens der Luft - die zu reinigende ammoniakhaltige Luft mit einer ersten Durchflussrate durch die Filtereinheit geleitet wird und die wässrige Flüssigkeit periodisch mit einer zweiten Luftdurchflussrate, die niedriger als die erste Luftdurchflussrate ist, in die Filtereinheit eingeleitet wird.

11. Verfahren nach einer der vorangehenden Schlussfolgerungen, wobei die zu reinigende ammoniakhaltige Luft stromaufwärts der Filtermatrix (225) und gegebenenfalls stromabwärts eines Staubfilters (112) und/oder eines Lüfters (111) durch wenigstens eine weitere Filtereinheit geleitet wird, wobei die wenigstens eine weitere Filtereinheit eine weitere Mehrzahl von Tüchern und eine weitere Filtermatrix (225) umfasst.

12. Verfahren nach Anspruch 11, wobei relativ reine wässrige Flüssigkeit auf die Filtereinheit aufgebracht wird und relativ mit Ammoniak verunreinigte wässrige Flüssigkeit auf wenigstens eine weitere Filtereinheit aufgebracht wird.

13. Verfahren nach einer der vorangehenden Schlussfolgerungen, wobei mit Ammoniak abgereicherte Luft stromabwärts der Filtereinheit durch ein Gitter (113) mit wenigstens einer Lamelle geleitet wird, wobei die wenigstens eine Lamelle (114) aus einer Ebene (115) mit einer stromabwärts gelegenen Kante (117) besteht und eine stromaufwärts gelegene Kante (116) aufweist, deren stromaufwärts gelegene Kante (116) niedriger als die stromabwärts gelegene Kante (117) angeordnet ist.

14. Verfahren nach einer der vorangehenden Schlussfolgerungen, wobei mit Ammoniak abgereicherte Luft stromabwärts der Filtermatrix (225) und der Tücher (226', 226") - und optional stromaufwärts des Gitters (113) mit den Lamellen (114) - durch eine Schicht aus grobmaschigem Material (228) strömt.

15. Verfahren nach einer der vorangehenden Schlussfolgerungen, wobei die zu reinigende ammoniakhaltige Luft mittels eines Lüfters (111), der stromaufwärts wenigstens eines aus der Filtermatrix (225) und dem Staubfilter (112) befindlich ist, durch die Tücher (226', 226") gefördert wird, wobei der Lüfter (111) vorzugsweise einstellbar ist.

## Revendications

1. Procédé pour soumettre de l'air contenant de l'ammoniac à nettoyer d'un espace à un traitement de lavage, au moyen d'une unité de filtration comprenant une matrice filtrante (225) qui peut être parcourue par un liquide dans une première direction et est perméable au gaz dans une seconde direction transversalement à la première direction ;
- un liquide aqueux étant introduit en un point relativement haut de la matrice filtrante (225) de l'unité de filtration,
- l'air contenant de l'ammoniac à nettoyer étant fait passer à travers la matrice filtrante (225) dans la seconde direction, et
- le liquide aqueux enrichi en ammoniac étant recueilli en un point relativement bas, **caractérisé en ce que** l'unité de filtration comprend au moins un tissu (226', 226") et l'air contenant de l'ammoniac à nettoyer en aval de la matrice filtrante (225) est fait passer à travers au moins un tissu (226', 226"), l'au moins un tissu (226', 226") étant en contact d'échange de liquide avec la matrice filtrante (225).

2. Procédé selon la revendication 1, l'unité de filtration comprenant au moins deux tissus (226', 226") et l'air contenant de l'ammoniac à nettoyer étant fait passer en aval de la matrice filtrante (225) à travers les au moins deux tissus (226', 226"), les tissus (226', 226") étant en contact d'échange de liquide avec la matrice filtrante (225).

3. Procédé selon la conclusion 1 ou 2, au moins un tissu (226', 226") étant pourvu d'une taille moyenne de maille inférieure à 4 mm carrés, de préférence inférieure à 2 mm carrés et de préférence comprise entre 0,5 et 1,5 mm carré.

4. Procédé selon l'une des conclusions précédentes, au moins un des tissus (226', 226") comprenant des fibres végétales naturelles, de préférence du jute.

5. Procédé selon l'une des conclusions précédentes, l'air contenant de l'ammoniac à nettoyer étant fait passer à travers la matrice filtrante (225) constituée de fibres de coco.

6. Procédé selon l'une des conclusions précédentes, l'air contenant de l'ammoniac à nettoyer de l'espace étant fait passer en amont de la matrice filtrante (225) à travers un filtre à poussière (112).

7. Procédé selon l'une des conclusions précédentes, le liquide aqueux contenant un acide et ayant un pH compris entre 1,0 et 6,0, de préférence, au moins initialement, entre 1,0 et 3,0, plus préférablement, au moins initialement, entre 1,0 et 2,0.

8. Procédé selon l'une des conclusions précédentes, l'acide dans le liquide aqueux étant un acide dont le sel d'ammonium dans le liquide aqueux a une solubilité moins bonne que l'acide, et la concentration de l'acide étant choisie de manière à ce qu'en l'absence d'ammoniac, la concentration soit supérieure d'au moins 50 % à la concentration de la solubilité maximale du sel d'ammonium de l'acide, de préférence supérieure d'au moins 100 % et plus préférablement supérieure d'au moins 150 %.

9. Procédé selon l'une des conclusions précédentes, la concentration de vapeur d'eau étant augmentée dans l'air contenant de l'ammoniac à nettoyer.

10. Procédé selon l'une des conclusions précédentes, pour nettoyer l'air, l'air contenant de l'ammoniac à nettoyer étant fait passer à travers l'unité de filtration à un premier débit, et le liquide aqueux étant introduit périodiquement dans l'unité de filtration à un second débit d'air inférieur au premier débit d'air.

11. Procédé selon l'une des conclusions précédentes, l'air contenant de l'ammoniac à nettoyer étant fait passer à travers au moins une autre unité de filtration en amont de la matrice filtrante (225) et, le cas échéant, en aval d'un filtre à poussière (112) et/ou d'un ventilateur (111), l'au moins une autre unité de filtration comprenant une autre pluralité de tissus et une autre matrice filtrante (225).

12. Procédé selon la revendication 11, un liquide aqueux relativement propre étant appliqué à l'unité de filtration et un liquide aqueux relativement contaminé par de l'ammoniac étant appliqué à au moins une autre unité de filtration.

13. Procédé selon l'une des conclusions précédentes, de l'air appauvri en ammoniac étant amené en aval de l'unité de filtration à travers une grille (113) avec au moins une latte, l'au moins une latte (114) étant constituée d'un plan (115) avec un bord aval (117) et présentant un bord amont (116) dont le bord amont (116) est positionné plus bas que le bord aval (117).

14. Procédé selon l'une des conclusions précédentes, de l'air appauvri en ammoniac s'écoulant en aval de la matrice filtrante (225) et des tissus (226', 226"), et éventuellement en amont de la grille (113) à lattes (114), à travers une couche de matériau à mailles grossières (228).

15. Procédé selon l'une des conclusions précédentes, l'air contenant de l'ammoniac à nettoyer étant amené à travers les tissus (226', 226") au moyen d'un ventilateur (111) placé en amont d'au moins une de la matrice filtrante (225) et du filtre à poussière (112), de préférence le ventilateur (111) étant réglable.
